# EUROPEAN PATENT SPECIFICATION

(11) **EP 0 742 911 B1**
(45) Date of publication and mention of the grant of the patent: **16.07.2003**
(21) Application number: 94930050.3
(22) Date of filing: 05.10.1994
(51) Int. Cl.: G02B 27/14, A63J 5/00, G02B 27/22, A63J 5/02, G09F 19/16

(54) **VIRTUAL IMAGE THEATER PRODUCTION SYSTEM**
THEATERAUFFÜHRUNGSSYSTEM MIT VIRTUELLEM BILD
SYSTEME DE REPRESENTATION THEATRALE PAR IMAGE VIRTUELLE

(30) Priority: 06.10.1993 US 132379
(43) Date of publication of application: 20.11.1996
(73) Proprietor: Design Magic, Inc., Raleigh, North Carolina 27612 (US)
(72) Inventor: Beaver, Robert T., Raleigh, NC 27612 (US)
(74) Representative: Woodward, John Calvin
(86) International application number: PCT/US94/11313
(87) International publication number: WO 95/010063

(56) References cited:
- EP-A- 0 310 077
- AU-A- 7 772 587
- JP-A- 6 250 597
- US-A- 3 035 836
- US-A- 4 805 895
- US-A- 5 061 061
- US-A- 5 086 354
- US-A- 5 255 028

## Description

### Field of the Invention

This invention relates to an apparatus and methods for creating visual illusion effects, and more particularly for creating stage effects in a theater setting.

### Description of the Related Art

Persons who have been involved in attempts to create visual illusions in the live stage productions of plays or other performances have utilized numerous types of devices to create a diversity of visual illusions. Of particular interest are illusions created by visibly merging actors or objects on a stage with a motion picture film to the degree that the observer cannot distinguish between the film and the stage and cannot tell where the boundary is.

One technique which has been used involves use of a slit screen. An actor walks on the stage through a flexible slit in a screen on which a motion is being presented. This technique is difficult to make appear realistic because the audience can generally see the slit itself and understand what has actually happened even though various efforts have been made to mask the slit visually, for example, with lights. Thus, despite use of techniques to minimize the visibility of the slit, it remains visible to anyone who sees it done more than once, and there is not a seamless merger of the real object and the projected image.

Also of interest are illusions in which a performer appears to be altered or hidden from view while being actually present on the stage. The basic invisibility effect can be achieved by any half-silvered mirror room or box with neutral or regularly patterned background. An early technique known as "Pepper's Ghost" was developed in the nineteenth century and is used in certain illusions of a haunted house. This technique uses an angled piece of glass between the audience and a stage surface. A ghost figure located off-stage where it is not visible from the audience is illuminated with bright lights so that the image of the ghost figure is reflected as a transparent image off the glass. Because of the angle and position of the glass, the transparent ghostly image of the ghost figure appears to be on stage with the "real" characters. Thus, using this technique an object may appear to be become more or less transparent, but it does not ever appear completely solid.

Another method of making a character present on the stage seem to disappear, termed "metempsychosis", utilizes a mirror having variations across its surface in the amount it is silvered. For example, lines are scribed in the silvering on a standard mirror, beginning with spread-out and/or thin lines and gradually increasing the thickness of the lines and/or decreasing the spacing between the scribed lines until there is an area of plain glass from which all of the silvering has been removed. The piece of variably silvered glass is placed in a grooved track at an angle across the stage. When the glass is moved back and forth in the track, a person on the stage behind the glass is visible when there is little silvering present between the person and the viewers, and is hidden when there is dense silvering present.

The illusion appliance of Hammond (U.S. Patent No. 1,456,233) utilizes a transparent glass mounted on an inclined plane, a translucent screen having a scene on it and positioned above the glass and reflected on it, and a second translucent screen upon which a moving picture may be projected. The moving picture appears to take place on the scene reflected in the glass. Hammond does not provide any mechanism for a live production or the use of actors in conjunction with a moving picture.

Other methods have involved partially silvered mirrors, which are typically made by spattering, or otherwise applying platinum or other metal to a glass so that a portion of incident light is reflected and a portion of the light passes through the glass depending on the extent of silvering. Rogers (U.S. Patent No. 4,736,214) provides an apparatus and method for producing what were called three-dimensional images from two-dimensional sources. This invention utilizes a projection source projecting multiple images to spaced apart reflectors, one of which reflectors is reflective and the second of which is transmissive. The invention utilizes two partially transmissive reflecting members and a rotating stage for props. The invention produces two virtual images which are in parallel spaced relation with each other, but does not utilize any images projected on a real screen, nor does it provide a way to used phased image projection coordinated in real time with live action on a stage.

A second patent of Rogers (U.S. Patent No. 4,805,895) is for an image forming apparatus and method where there are no image forming surfaces. A false ceiling separates a motion picture projector and rear view projection screen from the audience viewing area. A semi-transmissive reflecting member is disposed at an angle of 13.5 to 31 degrees to a vertical plane in front of the line of sight of the viewing audience. As with the first patent of Rogers, this patent does not provide coordinated real time phasing of images with an actual stage or an actual screen.

The Rogers patent also provides a summary of three prior "Blue Room Techniques" utilizing partially silvered mirrors. In the traditional Blue Room the mirror is vertical but at a 45° angle to a plane normal to the axis of a central observer's line of sight to a stage. The real object is in the wings of the theater. In Disney's Haunted Mansion Configuration (essentially the same as Pepper's Ghost discussed above), a large percentage silvered mirror is placed vertically at a 90° angle to a plane normal to the axis of a central observer's line of sight to the stage. The real objects are placed either above or below the audience area. In the Sideways Blue Room, the traditional Blue Room setup is rotated 90° around the axis of the central observer's line of sight. The patent of Robley et al. (U.S. Patent No. 5,061,061) provides a "front projection composite photography system" using reflex screens, and two projected background scenes. This system optically positions a staged scene into a projected scene using the depth characteristics of the camera and perspective introduced by a movable camera and relative camera axis positions of the background projections. The actual registration of the two projections can be viewed and corrected through the camera viewfinder before the particular composite picture is taken. Robley does not include a live performance, nor provide a way that a live stage production using multiple mirrors could be viewed directly by an audience, nor a way of phasing multiple images.

It is known from AU-A07772587 to provide an apparatus for providing visual illusion effects, comprising a first projection screen positioned in a first plane, a viewing area, a stage area, an illumination system for said stage area for illumination of objects on said stage area at a desired light level without directly illuminating said first projection screen, an inclined partially reflective sheet between said viewing area and said stage area, a second projection screen positioned in a second plane at a first angle to said first plane, a first projection means for projecting images on said first projection screen, a second projection means, and a source of video images for the first and second projection means.

An apparatus for providing visual illusion effects is defined in claim 1.

The present invention also provides a method according to claim 9.

Dependent claims define additional embodiments.

The invention may be utilised for entertainment performances, educational and other displays and interactive productions, where objects and/or persons on the stage area act in a manner co-ordinated with image projection to create a desired effect. Methods of using the apparatus include providing the optical illusion of having characters and objects appear to move from the stage into the screen and vice-versa, allowing interactions between the screen images and objects and/or persons on the stage, and having a character or object on the stage disappear, or having added objects or characters at selected locations with respect to projected images.

Other aspects and features of the invention will be more fully apparent from the following disclosure and appended claims.

Embodiments of the invention will now be described, by way of example only, in which:
Figure 1 is a schematic diagram of an apparatus according to the invention utilising one partially silvered mirror and showing how the location of a second projection screen may be changed;
Figure 2 is a schematic diagram of an apparatus according to the invention utilising one partially silvered mirror and a fully silvered mirror;
Figure 3 is a schematic diagram of a small scale version of the apparatus using video monitors as the projection screens;
Figure 4 shows how a position sensor may be used with the invention;
Figure 5 is a schematic diagram of a side view of the apparatus according to the invention;
Figure 6 is a schematic perspective diagram of the apparatus according to the invention;
Figure 7 is a schematic diagram showing the use of three screens in the invention;
Figure 8 is a schematic diagram showing a monitor as part of the invention;
Figure 9 is a schematic diagram showing use of a camera to assist in monitoring the stage view for the actor(s) on stage;
Figure 10 is a schematic diagram of one possible alternate stage area which may be part of the invention.

### DETAILED DESCRIPTION OF THE INVENTION AND PREFERRED EMBODIMENTS THEREOF

The invention provides an apparatus and method for merging stage action with a projected image for viewing by a live audience.

The present invention in its first embodiment comprises an apparatus for providing optical illusion effects, comprising:
(a) a first projection screen 20, most preferably a rear projection screen, having a front viewing side 22 and being positioned in a first plane 24;
(b) a viewing area 26 from which persons may view said first projection screen 20;
(c) a stage area 28 between said viewing area 26 and said first projection screen 20;
(d) an illumination system 30 for said stage area 28 so that objects on said stage are 28 may be illuminated at a desired light level without directly illuminating said first projection screen 20;
(e) an inclined partially silvered mirror 32 between said viewing area 26 and said stage area 28, said mirror 32 being inclined upward away from the viewing area 26;
(f) a second projection screen 34 positioned in a second plane 36 at a first angle α to said first plane 24, wherein said inclined mirror 32 is positioned between said first and second planes;
(g) a first projection means 38 for projecting images by rear projection on said first projection screen 20 so that images on said first projection screen 20 may be seen by viewers in said viewing area 26;
(h) a second projection means 40 for projecting images on said second projection screen 34 so that images on said second projection screen 34 are visible to said viewers by means of reflection from said mirror 32 and appear to be located at a selected location; and
(i) a source of video images for the projection means and a switching means 42 (most preferably computer-controlled) for changing between images from said projection means 38, 40 so that viewers may be presented an image from either or both projection means at any one time.

The invention preferably utilizes a partially silvered mirror, for example, a half-silvered mirror between the viewing area and the screen as mirror 32. Although termed "silvered", other reflective metals may be used. Both sides of such mirrors reflect light, although one side of the mirror provides a clearer, sharper image, and is the side which is used in the invention to reflect images which are to be seen by the audience. A partially silvered mirror as used in the invention may also be termed a "beamsplitter" which more graphically defines its capability of allowing a portion of the impinging light to be transmitted, and a portion to be reflected.

For a full life-size stage, the size of mirror 32 is preferably at least about 2 x 3 feet for partial views of an actor or views of a small object, to 4 x 6 feet for more substantial views. Preferably mirror 32 is at least about 7 x 12 feet in size so that an actor on the stage behind mirror 32 is not visible to the audience except through mirror 32 when appropriate lighting is used. Larger pieces of course, while being more expensive, and difficult to install, provide the capability of a larger stage area 28 upon which illusions may be provided according to the method of the invention. Thus, any mirror 32 which is of a technologically feasible size may be used. Mirrors may also be joined or mounted side-by-side to extend the mirror area.

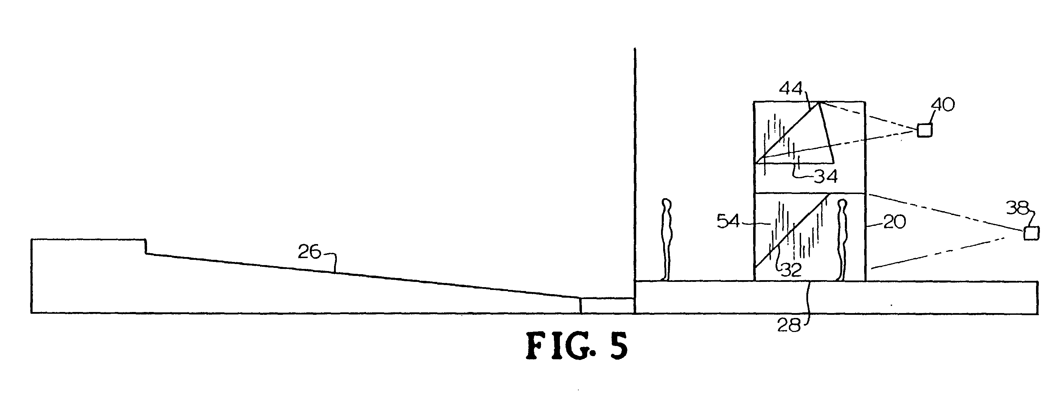

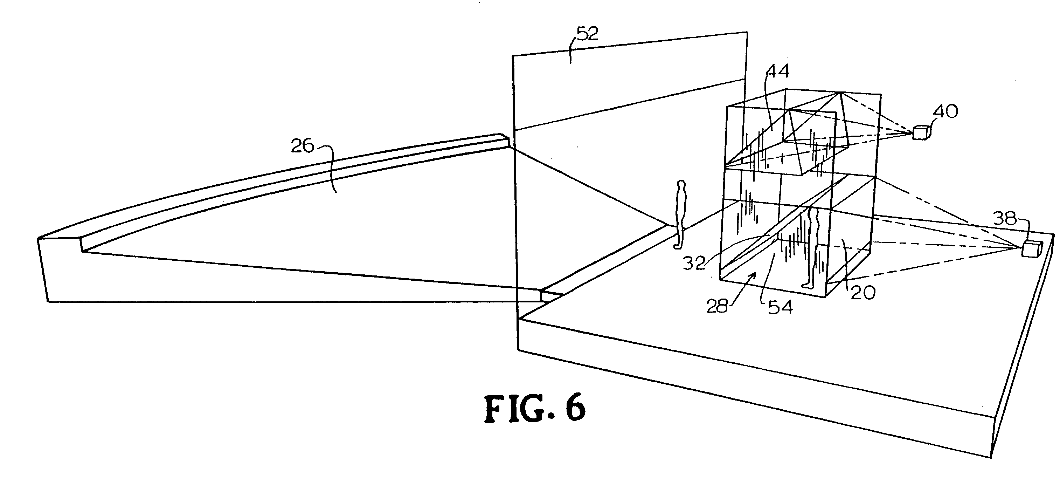

Preferably, there are opaque side pieces 54 as shown in Figures 5 and 6 on each side of mirror 32. The side pieces 54 both serve as supports for mirror 32 as well as disguising the fact that there is a mirror present by hiding the side edges of mirror 32. Alternatively, scenery pieces may be positioned at the edges of mirror 32 to serve the same purpose. If there are no side pieces 54 or substitutes therefor, extra care needs to be taken with respect to placement of the audience and the actors or objects behind mirror 32 so that a portion of the audience does not see more than is desired.

The first projection screen 20 preferably is the size of all or substantially all of the entire rear wall of the stage area 28, however, smaller areas may be selectively covered, particularly if the area in which illusions are to be provided does not comprise the entire stage area 28. To enable the visual merger of stage and screen, first projection screen 20 is a rear projection screen.

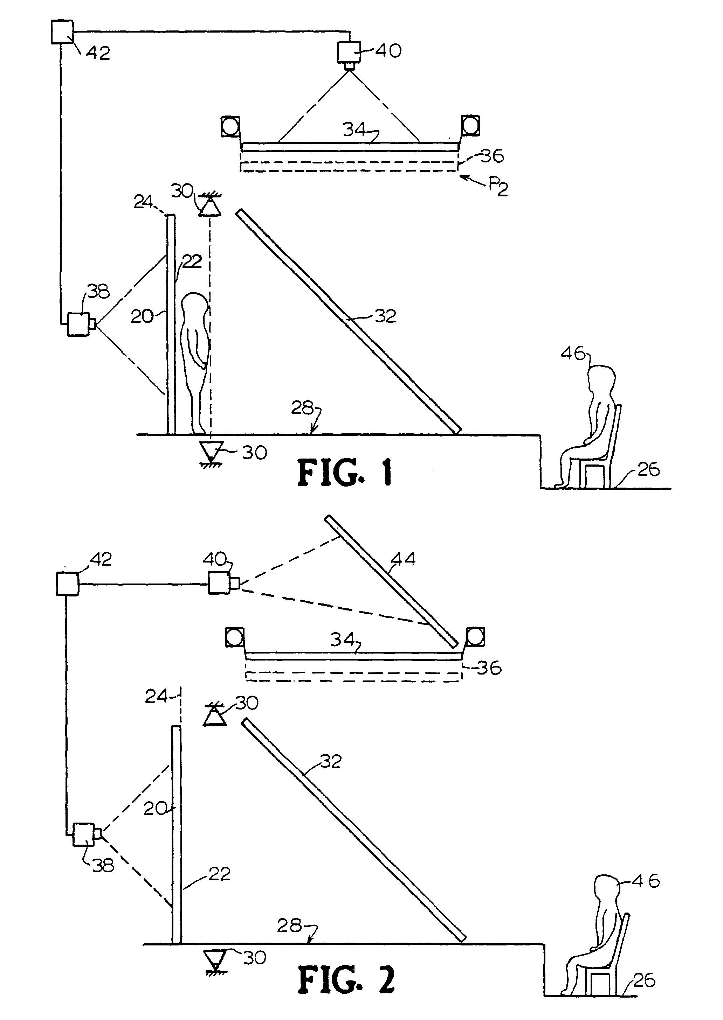

As shown in Figures 1-3 and 5-6, the second projection screen 34 is preferably positioned above the stage area 28. In this embodiment, for projection of an illusory image that appears to be on the first projection screen 20, the second projection screen 34 is located at the same angle α to the inclined, partially silvered mirror 32 as is the first projection screen 20. Although angle α is preferably 45 degrees and the two projection screens are preferably at a 90-degree angle to each other, other arrangements may be used. The main requirement is that the first projection screen is visible to the audience, and the image from the second projection means may be projected on mirror 32 so that it appears to the audience to be in the location desired for the particular optical effect. Additional projection screens may be added to increase the diversity and complexity of the visual presentations and illusions.

The image is projected on to the second projection screen 34, either directly as shown in Figure 1 by rear projection with a video projector in which the image is electrically reversed, or by projection of the image on a fully silvered mirror 44 inclined as shown in Figures 2 and 5-6 and at the same angle as the partially silvered mirror 32. Either of these techniques allows the same background as is being shown by the first projection means 38 to appear to be shown on the first projection screen 20 by the second projection means 40 which allows the method of the invention of making an object or person disappear. Using these techniques, the images seen by the audience as apparently appearing on the first screen may be either projected directly on the first screen or from the second (or third) screen via the first mirror, so that in either case, the screen positions are aligned so that the respective images are apparently identically positioned so that to the audience the images appear to be behind the stage area. Thus, when the first projection means shows a picture, a viewer 46 in the viewing area 26 sees the actual projected images through the partially silvered mirror 32 on the first projection screen 20. When the two projection screens are equidistant from, and at the same angle to, the inclined mirror 32, and the second projection means 40 shows a picture on the second projection screen 34, the image is really reflected in the partially silvered mirror 32, but because of the angles and distances between the screens and mirror, appears to a viewer to be on the first projection screen 20. The projection screen which is not in use is preferably darkened to create either a solid image (use of rear screen and side lighting) or make the image vanish completely (use of top screen only). Thus, when the rear screen image is projected, a person on the stage is visible to the audience as being clearly in front of the rear projection screen, but when the second or third screen image (see discussion of third screen below) is projected, an identical virtual image appears to be in the same spot as the rear projection screen, without being obscured by the person on the stage, and because the person on the stage is no longer illuminated, the audience just sees the virtual image from the second or third screen but does not see the actor even though the actor is still present.

The use of both an upper and a lower (rear projection) screen creates a transparent object on the stage as opposed to a solid or vanished object. To the extent the angle at which the partially silvered mirror 32 is hung or positioned creates mirror sag due to bending of the large sheet of glass, specially ground lenses may be used in the top projector to compensate optically for the sag. Alternatively, video projectors known in the art which are capable of correcting for screen sag can be used.

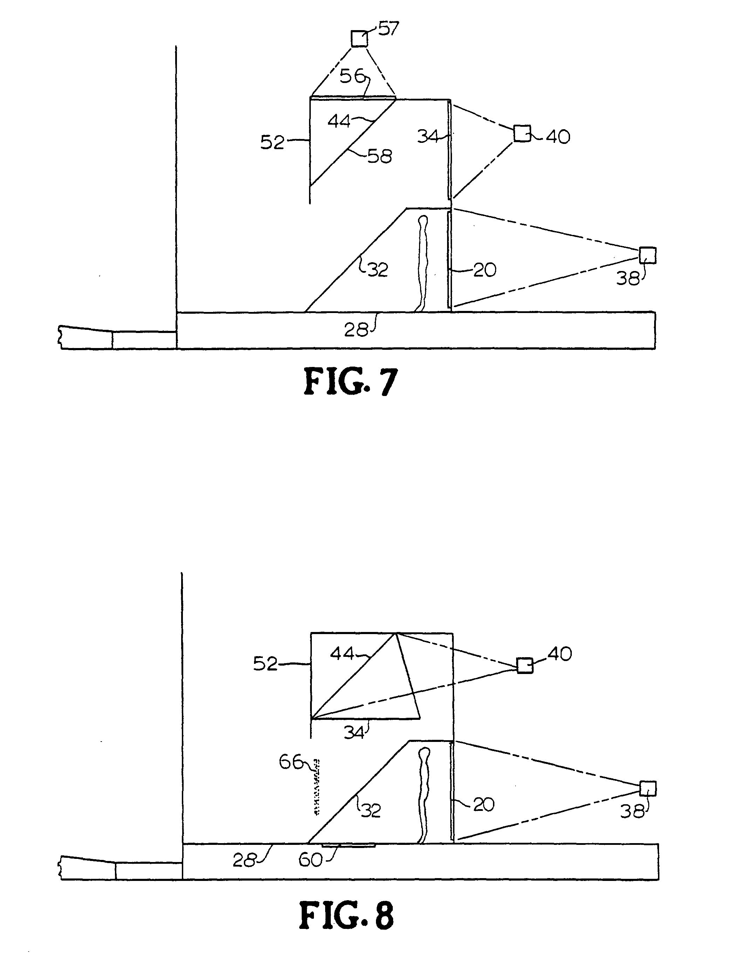

A third projection screen 56 and associated third projection means 57 may be placed as shown in Figure 7. In order to make complete use of second screen 34 and third screen 56, second partially silvered mirror 58 (beam splitter) replaces mirror 44 so that the image from one of the screens (shown as second screen 34) may be reflected from mirror 58, while the image of third screen 56 may pass through mirror 58 and be reflected from mirror 32. These two screens may be used in pre-selected sequence to provide virtual images at selected locations with respect to the stage area and the first (rear) projection screen 20 through computer-controlled switching of which screen images are being projected, the movement of the screens, and the lighting on the stage area, using computer-controlled switching means 42. Computer-controlled switching is well-known in the art, particularly for multimedia switching routinely used in many state-of-the-art theaters. Although in theory this process of adding beam splitters (mirrors) and screens, with corresponding projection means could be multiplied indefinitely, because the intensity of the image is decreased with a partially silvered mirror, the intensity of light actually reaching the lower area, and being visible to the audience as a virtual image, decreases substantially (by half when 50% silvered mirrors are used) for each beam splitter the image must pass through or reflect off.

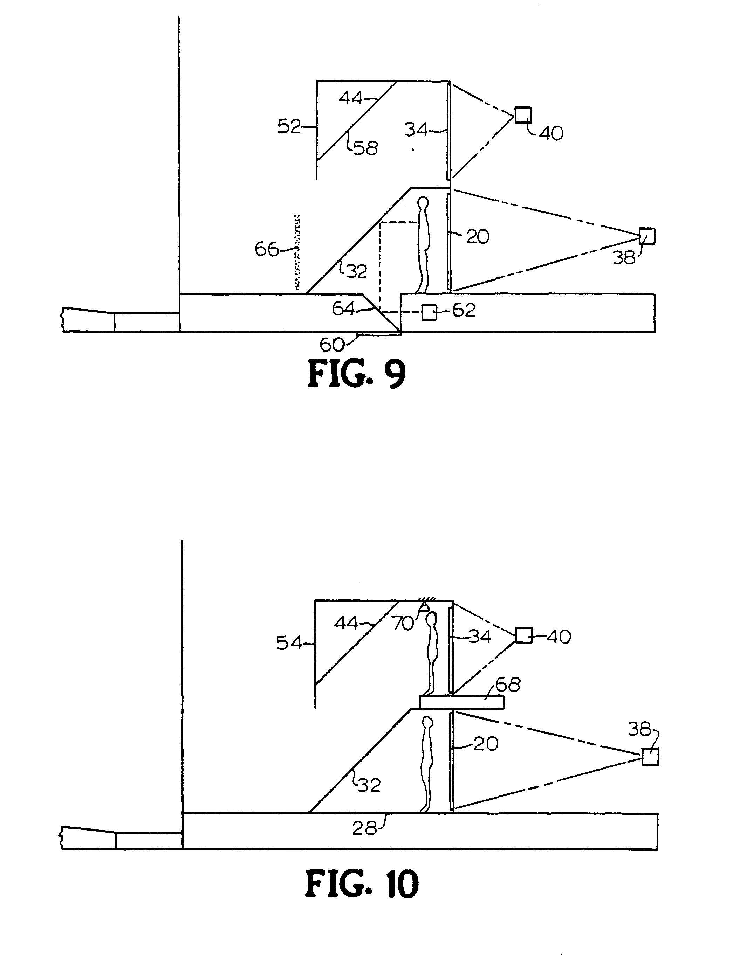

To add variety to the number of effects possible with the invention, one or more alternate stage areas 68 may be added (Figure 10). Solid objects and/or actors on an alternate stage, while not directly visible to the audience, can be made to seem to be present on the stage using mirror 58 to reflect the image of these objects and/or actors down to mirror 32, and thence to be viewed as a virtual image as discussed for viewing of images on the second and third screens. Additional illumination means 70 are provided for the alternate stage areas 68. When an alternate stage area 68 is used, it is likely that the first projection screen 20 would be moved back (farther from the viewing area 26) so that the image of an actor on the alternate stage area 68 would be in front of the first projection screen 20.

The viewing area 26 is preferably shaped and of a size so that persons in the audience can see the images reflected in mirror 32 at the appropriate time, and also can see an actor or other selected object(s) through mirror 32, when the actor or object are positioned on the stage behind the mirror and appropriately illuminated. This means that the ideal shape for the viewing area is a fan shape as shown in Figure 6. Thus, the audience members should be positioned so they cannot see the stage area behind mirror 32 except by seeing it through mirror 32.

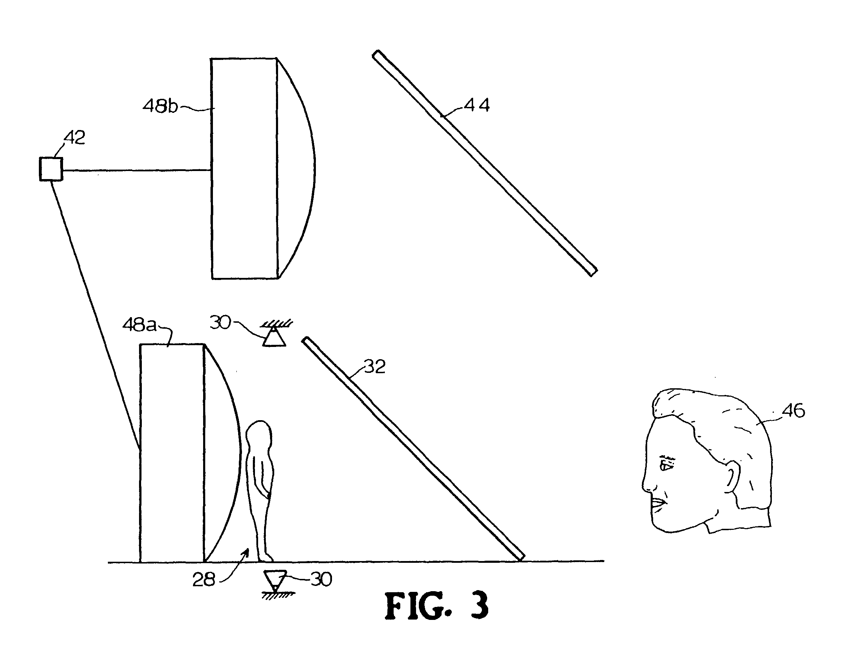

Substantially smaller mirror pieces than the large mirror 32 shown in the Figures 1 and 2 may be used for viewing of particular performances, for example, by puppets or smaller acting entities (Figure 3). Monitor 48a is shown for convenience in Figure 3 as being located beneath monitor 48b, closer to the viewer than is optically correct, and would be located substantially to the left of the position shown in Figure 3. For such miniature systems where the partially silvered mirror 32 is of a substantially reduced size, each projection means may comprise a television monitor 48a, b. To provide the different images, a video switcher connected to a video source machine may be used, manually, or by computerized control, to play the selected video either on the first television monitor 48a, or on a second television monitor 48b positioned at the same relative position as the second projection screen 34 of the full-sized version of the invention. Thus, the video source provides an image to the selected monitor, which selection determines whether the image will actually be on the screen which is being viewed by the viewer(s) or will only appear to be on the screen (use of the second monitor and inclined partially silvered mirror). It is clear that in order for the image from the second monitor 48b to match the image from the first monitor 48a, an image reverser would be required if there is no fully silvered mirror 44. The source(s) of the video image(s) may be integrally included in the video switcher 42 or be one or more separate instruments which are connected to both projection means.

Lighting on the stage changes in conjunction with the switching between projection means. Thus, when the first projection means 20 is used, lighting from lights 30 placed at one or more of the sides (not shown), top and bottom areas directly illuminates characters and objects on the stage area 28, but preferably does not in any significant way illuminate the first projection screen 20 or cause light to fall on the first projection screen 20. When the second projection means 40 is used, the characters and objects which are not to be seen are not illuminated directly, and preferably there is little incident light illuminating these characters and objects. Use of low lighting on an object when the second projection screen 34 is used allows an object to be seen as "transparent" as the audience can see the object but can also see what appears to be the background behind the object. If only the second projection screen is used with a side-lit object or person on the stage, the stage object will be very thin and "ghostly". The use of the first projection screen at the same time with a low projection level yields a more defined but still transparent stage object. Thus, the method of the invention allows a wide range of imagery, and a greater sense of presence than the prior art even for its "ghosts".

Utilizing selective lighting on particular objects or characters it is possible to have some of the characters or objects disappear and others remain, or to have some objects or characters partly disappear or partly be transparent, as the images switch from being displayed on the first projection screen 20 to those displayed on the second projection screen 34 which are seen by the viewers in mirror 32. Most preferably the area of the selective change is masked on both the first and second projected images to enhance the visual effect. Thus, an area of the image on the first screen, behind the object or character, must be blacked out in the making of the film or the tape or in the projecting of it. At the same time, everything on the second screen except the selected area must be blacked out so that there is an overlaid projection only in the selected area. This transition must be accompanied by a reduction of direct lighting on the selected object or character.

In order for the method of the invention to allow a person or object on the stage area 28 to seem to disappear, it is important in the preferred use of all of the embodiments of the invention that the components of the invention are properly aligned optically as discussed above for the first embodiment. Thus, when the particular screens which are being used are aligned, the background seen by the audience remains the same no matter which screen is being viewed because the two images from the two projection means are completely identical in appearance and apparent position to the viewers. When image projection is switched between two or more of such aligned projection screens, phasing of the images occurs, and the audience cannot tell that the switch has occurred because of the synchronization of images.

If the components of the invention are arranged correctly, persons in the viewing area 26 are not actually aware that the partially silvered mirror is there. It is important therefore not to dispel this illusion by having bright lights in the viewing area which might be directly reflected off of the mirror surface, or, except as planned for particular events, to allow persons from the audience into the stage area. Also, appropriate curtains or baffles 52 need to be used to hide the second projection screen 34 from the audience.

The switching between projection means, and concomitant control of the lighting can be controlled manually for creation of simple disappearing acts or other illusions. For more complicated scenarios, however, it is preferred to provide a computer-controlled switching means 42 comprising computer control of the lighting and projectors as needed for the particular performance. Such switching involves alternately turning on one projector and turning off the other, while also turning lights on or off, as well as controlling the level of variables, such as light, as described herein. Computer-controlled coordination of light control, image production, and screen movement allows phased movement so that various effects can be orchestrated and actor(s) and/or object(s) on the stage can be made to change in transparency, and relative location with respect to a scene or action being projected for viewing by the audience. As used herein, the term "image production system" includes the projection components allowing projection on the screens present in the invention, as well as computerized control over which of the screens is being utilized and the pattern of screen utilization (e.g., the sequence and timing of projection as computer-coordinated with stage lighting and screen movement which are timed in relationship to the action on stage).

In a second more preferred embodiment of the apparatus of the invention, the plane of at least one, and preferably all, of the projection screens is movable. The primary reasons for being able to move the projection screens, particularly during a stage performance, are: (a) to provide the two distinct effects of sandwiching/layering of images and the phasing of images (gradually increasing in visibility of one set of images on one screen, and the gradual reduction in visibility of another identical set of images on another screen); and (b) to be able to move a particular image or series of images as the screen moves so that the image moves through three dimensions.

With use of a moving screen an image can be transferred from one screen to another, for example, during a performance, by (a) moving a first screen, on which a series of images of images is being projected, so that the images seen by the audience appear to be in a particular location, and (b) then projecting the same images on another screen which is located so that the images then seen by the audience are in the same location as the images from the first screen had been. This type of movement allows many effects in which an actor or object on the stage can appear to merge with the images. For example, the screen movement can make it appear that something which was clearly in front of an actor has gone around behind the actor.

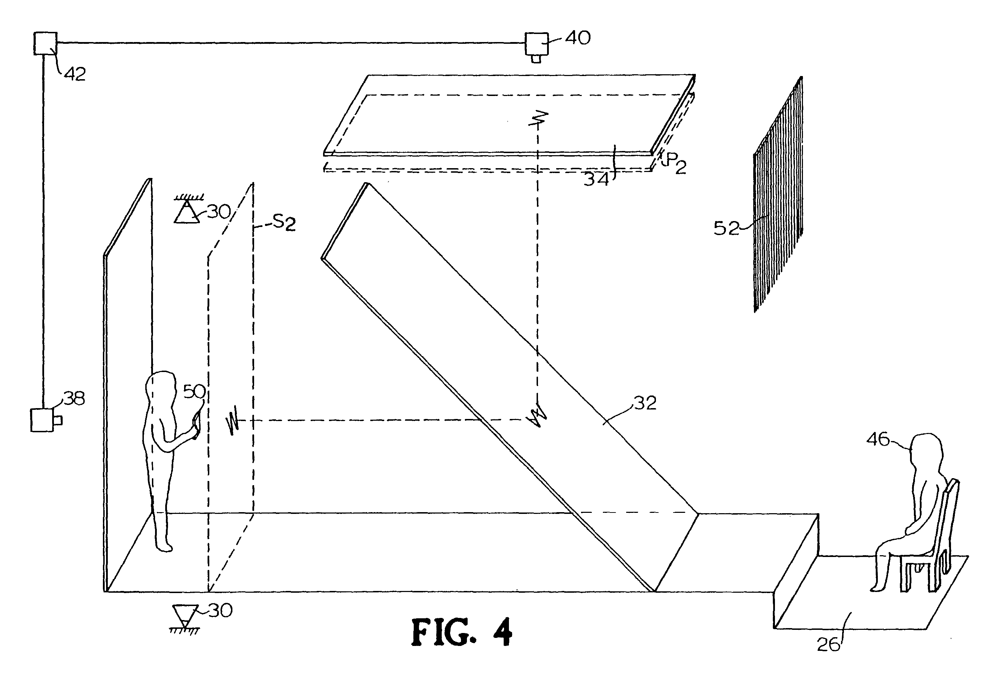

A possible area of screen movement is shown schematically in Figures 1, 2 and 4 for the second projection screen 34. Each movable projection screen is movable to one or more planes parallel with the plane on which it is positioned. As shown by the dotted lines parallel to the second projection screen 34 in Figure 1, if the second projection screen 34 is lowered from the original second plane 36 to a lower plane P₂, the apparent screen upon which the viewers see the image is shifted forward to screen position S₂ (shown at an exaggerated distance from the first screen in Figure 4 to allow for the standing person). Although this is not diagrammed specifically for the first and third projection screens, these are also preferably movable in the same manner as shown for the second projection screen 34. Generally, unless other specific effects are desired, it is preferred that the appropriate projection means be moved the same direction and amount corresponding to any movement of a projection screen so that there is not an apparent change in size of the projected image.

The opposite effect of shifting the apparent screen position backward away from the viewers occurs if the second projection screen (and preferably the second projection means) is raised above the second plane 36. This illusion occurs even though what is actually being seen by the viewers 46 in all cases when the second projection means 40 is being utilized is a reflection from the silvered mirror 32 which has not changed locations. It is clear that similar movement of the first projection screen in parallel with the position shown in the Figures allows variation of the amount of space between mirror 32 and the first projection screen. The means of movement of one or both projection screens may be by any means known in the art, for example, a bar placed at each of the four corners of the projection screen(s) along which the appropriate screen may track to the selected position.

The movable projection screens is preferably motorized so that they can move automatically, using programmed control mechanisms in coordination with other visual effects. Thus, using the second projection screen 34 in a sequence of different positions allows creation of the illusion that the projected image is moving forward or backward as the second projection screen 34 is moved downward and upward, respectively. If this illusion is used, for example, in conjunction with an actual actor on the stage area 28, and in conjunction with the appropriate changes in lighting, a character who is part of the image projected with the second projection means 40 could be made to appear to move, for example, around in front of the actual actor on the stage area 28. In contrast, the use of the rear (first) projection screen 20 allows the image to move behind the person on the stage because the person is between the projected image on screen 20 and the audience.

Another type of visual illusion may be created with the apparatus of the method if a position/orientation sensor such as the Polhemus tracker (Polhemus Labs, Cambridge, VT) is also used, for example on the hand of a character on the stage. Use of one or more position sensors provides a method of obtaining feedback as to where the actor is, so that the projected images may be correctly positioned on the screen(s) in relationship to the position of the actor. For example, as shown in Figure 4, if the character paints a name or word in the air by moving the hand appropriately to which the sensor 50 is attached, information from the sensor 50 can be fed back to a computer control mechanism (for example, as is used with such trackers in virtual reality applications) so that the word the character writes will appear on the second projection screen 34. The location of the second projection screen 34 determines where what is being written will appear to be with respect to the location of the character, for example, in front of or behind the character. Thus, the character may appear to be writing in a plane which is between the first projection screen and the viewing area. Use of this embodiment of the method of the invention would be extremely difficult to do by choreographing the movement of the actor's hand to an image in three-dimensional space because the actor cannot see the image and extremely close registration of the image and movement would be required for the effect to be realistic. Thus, the position sensor allows the actor's movement to be exactly synchronous with the image seen by the viewers.

In another example of use of a position sensor 50 with the invention, a character in the stage area 28 could draw the outline of a person in an area defined by where the second projection screen appeared to place the outline, for example directly in front of the character. Using computer graphics the animated picture of a person could appear within the outline drawn by the character. If the real person depicted within the outline were actually present on the stage but had been previously invisible to the viewers 46 using the method of the invention described above, the real person could then be made to become visible to the viewers and to "walk out of" the outline and be on the stage.

Use of a positional tracking means, such as a position sensor (or magnetic or optical tracker or visual tracking by someone in the audience) is useful for any type of interactivity of an actor who is in the stage area 28, particularly of a moving actor, with images being projected. The tracker allows closer synchronization and coordination of the actor's movement and location with the location and timing of the images being presented.

In order to increase the accuracy of merger between the real and projected images in a live performance, the invention further provides a means to give a performer on the stage area visual feedback, so that the performer can see the virtual images being seen by the audience (Figure 8). Thus, the invention preferably also comprises at least one lower monitor screen 60 which reflects off the rear side (lower) of mirror 32 so that the performer sees a virtual image 66 apparently hanging in space at about the plane of the opening of the front of the stage (the proscenium arch). This virtual image may be simply a view of the image projected by the top (second and/or third) projector(s) or it may be a composite of these together with what is actually being projected on the rear (first) projection screen at the back of the stage.

An alternate version of the monitor screen allows a camera 62 to record stage action including that of the performer, and to electronically composite all images into a representation of the image seen from the audience (Figure 9). The camera 62 is placed below the level of the stage area below mirror 32, and monitor screen 60 is lowered as shown in Figure 9, and an additional lower mirror 64 is utilized. What is happening on the stage is reflected downward from mirror 32 through an opening in the stage floor to mirror 64, and thence to the camera 62 (dotted line). In this way the performer is looking directly out into the audience but seeing exactly what they are seeing and thus is able to act out appropriate actions and emotions.

Other possible variations on the invention herein include use of interactive video as the image being projected on to the screens. For example, with interactive video, a person on the stage area can pick up, move or carry a projected image such as a chair or baby. Thus, what the character(s) are doing on the stage interacts with the specific aspects of the screen image, and the script for the program preferably incorporates the optical illusions according to the invention within such interaction. The same effect can be achieved without interactive video using tight choreography of the object and screen images and manual control. Interactive video simply provides a method of achieving better control and tighter timing, and thus provides more sophisticated and complex stage-screen interactions. Producing images directly with a computer allows the creation of images that can be made to react to the actions of the actor(s) in real time.

Although the preferred use of the components of the invention involves use of actor(s) and/or object(s) on the stage, and visual merger effects of these with the screen images, it is within the scope of this invention to use the apparatus of the invention without stage action or objects. In this case, the "stage area" is simply the area between mirror 32 and first projection screen 20, and the effects viewed by the audience are determined by the use of projected images and screen location without interaction with actual objects or persons.

Whether or not actors or other objects are present on the stage area 28, the apparatus of the invention may be used to provided multiplanar images, rather than a series of projected uniplanar images, so that more than one screen image is being projected and is visible at the same time to viewers who are in the viewing area. This may be accomplished by moving one or more screens so that images projected therefrom are not aligned.

In use of the invention herein, it is preferred that a sound system, known in the art as a three-dimensional sound system, be used that makes sounds appear to come from specific locations. The use of such a sound system is thus used to increase the audience's perception that the visual illusions are real.

While the invention has been described utilizing video projection, synchronized film projectors may also be used in the apparatus and method of the invention.

### Preferred embodiment of the Invention

The preferred apparatus of the invention for providing visual illusion effects, comprises a first screen which is a rear projection screen, has a front viewing side, and is positioned in a first plane; a viewing area from which persons in an audience may view images on said first screen; a stage area between said viewing area and said first screen; a first inclined, partially silvered mirror between said viewing area and said first screen; a second inclined, partially silvered mirror; a second screen not visible from said viewing area and movable between a plurality of second parallel positions so that a second series of images on said second screen is visible to said persons in said viewing area when said second series of images is reflected on said second mirror and then reflected on said first mirror, wherein said second series of images appears to said persons to be located at a selected location which is determined by the position of said second screen; a third screen not visible from said viewing area and being movable between a plurality of third parallel positions so that a third series of images on said third screen is visible to said persons when said third series of images is transmitted through said second mirror and reflected on said first mirror, wherein said third series of images appears to said persons to be located at a selected location which is determined by the position of said third screen; an image production system, for selective production of: a first series of images on said first screen so that said images are visible on said first screen to persons in said viewing area, and so that objects in said stage area do not cast shadows on said first screen; a second series of images on said second screen; and a third series of images on said third screen; an illumination system for said stage area for selective illumination of stationary or moving objects located on said stage area; a computer-controlled switching apparatus for selectively activating said image production system and said illumination system, and for causing said second and third screens to move; wherein objects and actors actually located on said stage area may be made to appear more or less transparent and to be located in different locations with respect to each other and said first screen and said viewing area, by synchronized coordination of: movement of said second screen and said third screen, selective production of series of images, and activation of said illumination system.

The preferred method of the invention, comprises providing the above apparatus, placing one or more objects on said stage area between said partially silvered mirror and said first screen; and utilizing said switching apparatus to coordinate movement of said screens, activation of said image production source to produce images on one or more selected screens in a determined sequence, and illumination of said objects and actors.

### Industrial Applicability

The invention may be used for entertainment and educational and training purposes.

## Claims

1. An apparatus for providing visual illusion effects, comprising a first projection screen (20) positioned in a first plane (24), a viewing area (26), a stage area (28), an illumination system (30) for said stage area (28) for illumination of objects on said stage area (28) at a desired light level without directly illuminating said first projection screen (20), an inclined partially reflective sheet (32) between said viewing area (26) and said stage area (28), a second projection screen (34) positioned in a second plane (36) at a first angle to said first plane (24), a first projection means (38) for projecting images on said first projection screen (20), a second projection means (40), and a source of video images for the first and second projection means (38,40) **characterised in that** the first projection screen (20) has a front side (22) viewable by persons in an audience in the viewing area (26) and the stage area (28) is disposed between the viewing area (26) and the first projection screen (20) and wherein the sheet (32) is a partially silvered mirror and is inclined upwardly away from the viewing area (26) between the first and second planes (24,36) occupied by the first and second projection screen (20,34) at an angle to the first and second planes (24,36), the apparatus further comprising a computer controlled switching means (42) for changing between images projected by said first and second projection means (38,40), the arrangement being such that images projected on the first projection screen (20) by the first projection means (38) are visible to an audience in the viewing area (26) and images projected on the second projection screen (34) are visible to an audience by means of reflection from the mirror (32) and appear to be located at a selected location, the computer controlled switching means (42) being operable to present an audience an image from either or both projection means (38,40) at any one time.

2. Apparatus according to claim 1 wherein said mirror (32) is approximately half-silvered.

3. Apparatus according to claim 1 or claim 2 wherein at least one of said screens (20,34) is movable.

4. Apparatus according to claim 3, wherein said second screen (34) is movable during performance on the stage area (28) to at least one alternate second plane parallel to said second plane (36).

5. Apparatus according to any preceding claim wherein said second projection screen (34) is a rear projection screen and said second projection means (40) is a rear projection means wherein the images are electrically reversible.

6. Apparatus according to claim 1 wherein said second projection screen (34) is a rear projection screen, said apparatus further comprises a full silvered mirror parallel to said partially silvered mirror (32), and wherein images from said second projection means (40) are projected on said full silvered mirror and then projected on said second projection screen (34).

7. Apparatus according to any preceding claim wherein said means of alternating between images from said projection means comprises image dissolve means.

8. Apparatus according to any preceding claim wherein the inclined mirror (32) is positioned between the first and second planes (24,36) and at an equal angle to said first and second planes (24,36).

9. A method of providing visual illusion effects, comprising the steps of providing a first projection screen (20) positioned in a first plane (24), a viewing area (26), a stage area (28) an illumination system (30) for said stage area (28) for illumination of objects on said stage area (28) at a desired light level without directly illuminating said first projection screen (20), an inclined partially reflective sheet (32) between said viewing area (26) and said stage area (28), a second projection screen (34) positioned in a second plane (36) at a first angle to said first plane (24), a first projection means (40), and a source of video images for the projection means (38,40), the first projection screen (20) having a front side viewable by persons in an audience in the viewing area (26) and the stage area (28) being disposed between the viewing area (26) and the first projection screen (20), and wherein the sheet (32) is a partially silvered mirror and is inclined upwardly away from the viewing area (26) between the first and second plane (24,36) occupied by the first and second projection screens (20,34) at an angle to the first and second planes (24,36), the apparatus further comprising a computer controlled switching means (42) for changing between images projected by said first and second projecting means (38,40), the arrangement being such that images projected on the first projection screen (20) by the first projection means (38) are visible to an audience in the viewing area (26) and images projected on the second projection screen (34) are visible to an audience by means of reflection from the mirror (32) and appear to be located at a selected location, the computer controlled switching means (42) being operable to present an audience an image from either or both projection means (38,40) at any one time, the method being **characterised by** the steps of placing an object between said partially silvered mirror (32) and said rear projection screen (20, and utilising said projection means (38,40) to create a visual illusion, associated with said object, at an apparent location, said apparent location selected from the group consisting of (i) a location in front of images on the first projection screen (20), (ii) a location behind images on the first projection screen (20), and (iii) a non-visible location.

10. A method according to claim 9 wherein said optical illusion effects comprise making a character or object located on said stage area (28) not be visible to persons in said viewing area (26), said apparatus further comprises an illumination system (30) for said stage area (28) for illumination of objects on said stage area (28) at a desired light level without directly illuminating said rear projection screen (20), and said method further comprises illuminating said character or object when images are projected from said first projection means (38), and ceasing illumination of said character or object when images are projected from said second projection means (40).

11. A method according to claim 9 or claim 10 further comprising moving said second projection screen (34) to a plane parallel to said second plane (36) resulting in a change in the apparent location of images on said second projection screen (34) with respect to images on said first projection screen (20).

12. A method according to claim 11 further comprising providing a character in a production utilising said apparatus with a position sensor device (50).

13. A method according to claim 12 further comprising linking said position sensor device (50) with graphic illustration means which are visible on at least one of said projection screens (20,34).

14. A method according to claim 13 wherein said graphic illustration means results in an animated image which appears to be on a plane in space between said first plane (24) and the viewing area (26).

15. A method according to any of claims 12 to 14 wherein the method includes the steps of providing moving picture images, which are visible to an audience in the viewing area (26), utilising either of the projection means (38,40) so that an object or actor on the stage area (28) appears to change between being included among the moving picture images, being transparent to a chosen degree, being invisible, being on the stage area (28) separate from the moving picture images, and interacting with the moving picture images through co-ordination of the degree of transparency of the object or actor with the appearance and disappearance of images in the moving picture, by co-ordinated selective use of said projection means (38,40), said lighting means and said position sensor (50).

16. A method according to claim 15 including the steps of using first projection means (20) to provide the moving picture images.

17. A method according to claim 15 or claim 16 further comprising moving said second projection screen (34) resulting in a change in the apparent location of images on said second projection screen (34) with respect to images on said first projection screen (20).

18. An apparatus according to any of claims 1 to 7 wherein the second projection screen (34) is not visible from said viewing area (26) and is movable between a plurality of second parallel positions so that a second series of images on said second projection screen (34) is visible to an audience due to reflection of said second series of images from said partially silvered mirror (32), wherein said second series of images appears to the audience to be located at a selected location which is determined by the position of said second projection screen (34), the apparatus further comprising an image production system for selectively placing images on said first screen (20) and said second screen (34), the computer controlled switching means (42) being operable to selectively activate said image production system and said illumination system (30), and for causing said second screen (34) to move, wherein objects and actors actually located on said stage area (28) may be made to appear more or less transparent and to be located in different locations with respect to each other and said first screen (20) and said viewing area (28), by synchronised co-ordination of (i) movement of said second screen (34), (ii) selective production of series of images, and (iii) activation of said illumination system (30) and wherein objects may be made to disappear completely or be transparent by aligning the screens (30,34) to be equidistant from and at the same angle from the partially silvered mirror (32).

19. The apparatus of claim 18 wherein said images are moving images.

20. The apparatus of claim 18 or claim 19 further comprising a second mirror (58) positioned so that images on said second screen (34) are reflected in said second mirror (58) and then on said first mirror (32).

21. The apparatus according to any of claims 18 to 20 further comprising a third screen (56) not visible from said viewing area (26) and being movable between a plurality of third parallel positions, wherein said image production system also may be selectively activated to place images on said third screen (56), so that a third series of images on said third screen (56) is visible to said persons in said audience due to reflection from said first mirror (32), and appears to be located at a selected location which is determined by the position of said third screen (56) relative to said mirror (32), wherein said switching apparatus (42) also selectively causes said third screen (56) to move.

22. The apparatus of claim 21 wherein said first projecting screen (20) is selectively movable between a plurality of first parallel positions in co-ordination with selective activation of said image production system and said illumination system (30) and movement of said second screen (34) and said third screen (56), to produce one or more selected effects visible to said person.

23. The apparatus according to any preceding claim further comprising a monitor screen (60) to enable actors in said stage area (28) to see the visual illusion effects which are visible to persons in said audience.

24. A method according to claim 9 wherein the apparatus includes a second inclined, partially silvered mirror, a third screen (56) not visible from said viewing area (26) and being movable between a plurality of third parallel positions so that a third series of images on said third screen (56) is visible to said persons when said third series of images is transmitted through said second mirror (58) and reflected on said first mirror (32), wherein said third series of images appears to said persons to be located at a selected location which is determined by the position of said third screen (56) and an image production system, for selective production of (i) a first series of images on said first projection screen (20) so that said images are visible on said screen (20) to persons in said viewing area (26), and so that objects and actors in said stage area do not cast shadows on said first projection screen (20), (ii) a second series of images on said second screen (34), and (iii) a third series of images on said third screen (56), an illumination system (30) for said stage area for selective illumination of stationary or moving objects or actors located on said stage area (28), a position sensor (50) and a computer controlled switching apparatus (42) for selectively activating said image production system and said illumination system (30) and for causing said second (34) and third screen (56) to move, wherein an apparent transparency and an apparent location, with respect to the location of said first projection screen (20) and said viewing area (26), of each of said moving and stationary objects or actors, which are actually located on said stage area (28), are changeable by using said switching apparatus (42) to cause co-ordination of (i) movement of said second and third screens (34,56), (ii) selective activation of said image production system, (iii) activation of said illumination system (30), and (iv) use of said position sensor (50), wherein the method includes the steps of placing one or more objects or actors on said stage area (28) between said partially silvered mirror (32) and said first projection screen (20), and utilising said switching apparatus (42) to co-ordinate movement of said screens (20,34), activation of said image production source to produce images on one or more selected screens (20,34) in a determined sequence, and illumination of said objects and actors.

## Patentansprüche

1. Vorrichtung zum Bereitstellen visueller Illusionseffekte, umfassend einen in einer ersten Ebene (24) positionierten ersten Projektionsschirm (20), einen Zuschauerbereich (26), einen Bühnenbereich (28), ein Beleuchtungssystem (30) für den genannten Bühnenbereich (28) zum Beleuchten von Objekten auf dem genannten Bühnenbereich (28) mit einem gewünschten Helligkeitsgrad ohne den genannten ersten Projektionsschirm (20) direkt zu beleuchten, eine geneigte teilreflektierende Fläche (32) zwischen dem genannten Zuschauerbereich (26) und dem genannten Bühnenbereich (28), einen in einer zweiten Ebene (36) in einem ersten Winkel zu der genannten ersten Ebene (24) positionierten zweiten Projektionsschirm (34), einen ersten Projektor (38) zum Projizieren von Bildern auf den genannten ersten Projektionsschirm (20), einen zweiten Projektor (40) und eine Videobildquelle für den ersten und den zweiten Projektor (38, 40), **dadurch gekennzeichnet, dass** der erste Projektionsschirm (20) eine Vorderseite (22) hat, die von Personen in einem Publikum in dem Zuschauerbereich (26) betrachtet werden kann, und der Bühnenbereich (28) zwischen dem Zuschauerbereich (26) und dem ersten Projektionsschirm (20) angeordnet ist und wobei die Fläche (32) ein teildurchlässiger Spiegel ist und nach oben von dem Zuschauerbereich (26) weg zwischen der ersten und der zweiten Ebene (24, 36), die von dem ersten und dem zweiten Projektionsschirm (20, 34) eingenommen werden, in einem Winkel zu der ersten und der zweiten Ebene (24, 36) geneigt ist, wobei die Vorrichtung ferner eine rechnergesteuerte Schaltvorrichtung (42) zum Wechseln zwischen Bildern hat, die von dem genannten ersten und zweiten Projektor (38, 40) projiziert werden, wobei die Anordnung dergestalt ist, dass von dem ersten Projektor (38) auf den ersten Projektionsschirm (20) projizierte Bilder für ein Publikum in dem Zuschauerbereich (26) sichtbar sind und auf den zweiten Projektionsschirm (34) projizierte Bilder mittels Spiegelung von dem Spiegel (32) für ein Publikum sichtbar sind und an einem ausgewählten Ort befindlich zu sein scheinen, wobei die rechnergesteuerte Schaltvorrichtung (42) funktionsfähig ist, um einem Publikum jeweils ein Bild von einem oder von beiden Projektoren (38, 40) zu präsentieren.

2. Vorrichtung nach Anspruch 1, bei der der genannte Spiegel (32) ungefähr halbdurchlässig ist.

3. Vorrichtung nach Anspruch 1 oder Anspruch 2, bei der wenigstens einer der genannten Schirme (20, 34) bewegbar ist.

4. Vorrichtung nach Anspruch 3, bei der der genannte zweite Schirm (34) während einer Aufführung auf dem Bühnenbereich (28) auf wenigstens eine andere zweite, zu der genannten zweiten Ebene (36) parallele Ebene bewegbar ist.

5. Vorrichtung nach einem der vorhergehenden Ansprüche, bei der der genannte zweite Projektionsschirm (34) ein Durchprojektionsschirm ist und der genannte zweite Projektor (40) ein Durchprojektor ist, wobei die Bilder elektrisch umkehrbar sind.

6. Vorrichtung nach Anspruch 1, bei der der genannte zweite Projektionsschirm (34) ein Durchprojektionsschirm ist, wobei die genannte Vorrichtung ferner einen voll reflektierenden Spiegel parallel zu dem genannten halbdurchlässigen Spiegel (32) umfasst und wobei Bilder von dem genannten zweiten Projektor (40) auf den genannten voll reflektierenden Spiegel projiziert und dann auf den genannten zweiten Projektionsschirm (34) projiziert werden.

7. Vorrichtung nach einem der vorhergehenden Ansprüche, bei der die genannte Vorrichtung zum Wechseln zwischen Bildern von den genannten Projektoren eine Bildüberblendungseinrichtung umfasst.

8. Vorrichtung nach einem der vorhergehenden Ansprüche, bei der der geneigte Spiegel (32) zwischen der ersten und der zweiten Ebene (24, 36) und in einem gleichen Winkel zu der genannten ersten und zweiten Ebene (24, 36) positioniert ist.

9. Verfahren zum Bereitstellen visueller Illusionseffekte, umfassend die folgenden Schritte: Bereitstellen eines in einer ersten Ebene (24) positionierten ersten Projektionsschirms (20), eines Zuschauerbereichs (26), eines Bühnenbereiches (28), eines Beleuchtungssystems (30) für den genannten Bühnenbereich (28) zum Beleuchten von Objekten auf dem genannten Bühnenbereich (28) mit einem gewünschten Helligkeitsgrad, ohne den genannten ersten Projektionsschirm (20) direkt zu beleuchten, einer geneigten teilreflektierenden Fläche (32) zwischen dem genannten Zuschauerbereich (26) und dem genannten Bühnenbereich (28), eines in einer zweiten Ebene (36) in einem ersten Winkel zu der genannten ersten Ebene (24) positionierten zweiten Projektionsschirms (34), eines ersten Projektors (40) und einer Videobildquelle für die Projektoren (38, 40), wobei der erste Projektionsschirm (20) eine Vorderseite hat, die von Personen in einem Publikum in dem Zuschauerbereich (26) betrachtet werden kann, und der Bühnenbereich (28) zwischen dem Zuschauerbereich (26) und dem ersten Projektionsschirm (20) angeordnet ist und wobei die Fläche (32) ein teildurchlässiger Spiegel ist und nach oben von dem Zuschauerbereich (26) weg zwischen der ersten und der zweiten Ebene (24, 36), die von dem ersten und dem zweiten Projektionsschirm (20, 34) eingenommen werden, in einem Winkel zu der ersten und der zweiten Ebene (24, 36) geneigt ist, wobei die Vorrichtung ferner eine rechnergesteuerte Schaltvorrichtung (42) zum Wechseln zwischen Bildern umfasst, die von dem genannten ersten und zweiten Projektor (38, 40) projiziert werden, wobei die Anordnung dergestalt ist, dass von dem ersten Projektor (38) auf den ersten Projektionsschirm (20) projizierte Bilder für ein Publikum in dem Zuschauerbereich (26) sichtbar sind und auf den zweiten Projektionsschirm (34) projizierte Bilder mittels Spiegelung von dem Spiegel (32) für ein Publikum sichtbar sind und an einem ausgewählten Ort befindlich zu sein scheinen, wobei die rechnergesteuerte Schaltvorrichtung (42) funktionsfähig ist, um einem Publikum jeweils ein Bild von einem oder von beiden Projektoren (38, 40) zu präsentieren, wobei das Verfahren durch die folgenden Schritte gekennzeichnet ist: Platzieren eines Objektes zwischen dem genannten teildurchlässigen Spiegel (32) und dem genannten Durchprojektionsschirm (20) und Nutzen der genannten Projektoren (38, 40) zum Erzeugen einer mit dem genannten Objekt assoziierten visuellen Illusion an einem scheinbaren Ort, wobei der genannte scheinbare Ort aus der Gruppe bestehend aus (i) einem Ort vor Bildern auf dem ersten Projektionsschirm (20), (ii) einem Ort hinter Bildern auf dem ersten Projektionsschirm (20) und (iii) einem nicht sichtbaren Ort ausgewählt wird.

10. Verfahren nach Anspruch 9, bei dem die genannten optischen Illusionseffekte das Nichtsichtbarmachen einer auf dem genannten Bühnenbereich (28) befindlichen Gestalt für Personen in dem genannten Zuschauerbereich (26) umfassen, wobei die genannte Vorrichtung ferner ein Beleuchtungssystem (30) für den genannten Bühnenbereich (28) umfasst zum Beleuchten von Objekten auf dem genannten Bühnenbereich (28) mit einem gewünschten Helligkeitsgrad, ohne den genannten Durchprojektionsschirm (20) direkt zu beleuchten, und wobei das genannte Verfahren ferner das Beleuchten der genannten Gestalt oder des genannten Objektes, wenn Bilder von dem genannten ersten Projektor (38) projiziert werden, und das Abbrechen der Beleuchtung der genannten Gestalt oder des genannten Objekts, wenn Bilder von dem genannten zweiten Projektor (40) projiziert werden, umfasst.

11. Verfahren nach Anspruch 9 oder Anspruch 10, ferner umfassend das Bewegen des genannten Projektionsschirms (34) auf eine zur genannten zweiten Ebene (36) parallelen Ebene, was zu einer Änderung des scheinbaren Ortes von Bildern auf dem genannten zweiten Projektionsschirm (34) in Bezug auf Bilder auf dem genannten ersten Projektionsschirm (20) führt.

12. Verfahren nach Anspruch 11, ferner umfassend das Bereitstellen einer Gestalt in einer Inszenierung unter Nutzung der genannten Vorrichtung mit einem Positionssensorgerät (50).

13. Verfahren nach Anspruch 12, ferner umfassend das Verbinden des genannten Positionssensorgeräts (50) mit Mitteln zur graphischen Illustration, die auf wenigstens einem der genannten Projektionsschirme (20, 34) sichtbar sind.

14. Verfahren nach Anspruch 13, bei dem das genannte Mittel zur graphischen Illustration ein animiertes Bild zur Folge hat, das auf einer Ebene im Raum zwischen der genannten ersten Ebene (24) und dem Zuschauerbereich (26) erscheint.

15. Verfahren nach einem der Ansprüche 12 bis 14, bei dem das Verfahren die folgenden Schritte aufweist: Bereitstellen von Bewegtbild-Bildern, die für ein Publikum in dem Zuschauerbereich (26) sichtbar sind, unter Verwendung eines der Projektoren (38, 40), sodass ein Objekt oder Schauspieler auf dem Bühnenbereich (28) durch koordinierte selektive Verwendung der genannten Projektoren (38, 40), der genannten Beleuchtungseinrichtung und des genannten Positionssensors (50) zwischen Folgendem wechselt: unter den Bewegtbild-Bildern eingeschlossen zu sein, bis zu einem gewählten Grad durchscheinend zu sein, unsichtbar zu sein, auf dem Bühnenbereich (28) separat von den Bewegtbild-Bildern zu sein, und Wechselwirken mit den Bewegtbild-Bildern durch Koordination des Transparenzgrades des Objektes oder Schauspielers mit dem Erscheinen und Verschwinden von Bildern in dem Bewegtbild.

16. Verfahren nach Anspruch 15 mit den Schritten der Verwendung des ersten Projektors (20) zum Bereitstellen der Bewegtbild-Bilder.

17. Verfahren nach Anspruch 15 oder Anspruch 16, ferner umfassend das Bewegen des genannten zweiten Projektionsschirms (34), was zu einer Änderung des scheinbaren Ortes von Bildern auf dem genannten zweiten Projektionsschirm (34) in Bezug auf Bilder auf dem genannten ersten Projektionsschirm (20) führt.

18. Verfahren nach einem der Ansprüche 1 bis 7, bei dem der genannte zweite Projektionsschirm (34) von dem genannten Zuschauerbereich (26) aus nicht sichtbar ist und zwischen einer Mehrzahl von zweiten parallelen Positionen bewegbar ist, sodass eine zweite Reihe von Bildern auf dem genannten zweiten Projektionsschirm (34) wegen der Spiegelung der genannten zweiten Reihe von Bildern von dem genannten halbdurchlässigen Spiegel (32) für ein Publikum sichtbar ist, wobei die genannte zweite Reihe von Bildern für das Publikum an einem ausgewählten Ort befindlich zu sein scheint, der durch die Position des genannten zweiten Projektionsschirms (34) bestimmt wird, wobei die Vorrichtung ferner ein Bilderzeugungssystem zum selektiven Platzieren von Bildern auf dem genannten ersten Schirm (20) und dem genannten zweiten Schirm (34) umfasst, wobei die rechnergesteuerte Schaltvorrichtung (42) funktionsfähig ist, um das genannte Bilderzeugungssystem und das genannte Beleuchtungssystem (30) selektiv zu aktivieren und um zu veranlassen, dass der genannte zweite Schirm (34) bewegt wird, wobei durch synchronisierte Koordinierung (i) von Bewegungen des genannten zweiten Schirmes (34), (ii) der selektiven Erzeugung von Reihen von Bildern und (iii) der Aktivierung des genannten Beleuchtungssystems (30) bewirkt werden kann, dass tatsächlich auf dem genannten Bühnenbereich (28) befindliche Objekte und Schauspieler mehr oder weniger transparent und in Bezug aufeinander und den genannten ersten Schirm (20) und den genannten Zuschauerbereich (28) an verschiedenen Orten befindlich erscheinen, und wobei bewirkt werden kann, dass Objekte vollständig verschwinden oder durchscheinend sind, indem die Schirme (30, 34) ausgerichtet werden, sodass sie den gleichen Abstand zu dem halbdurchlässigen Spiegel (32) haben und im gleichen Winkel zu ihm sind.

19. Vorrichtung nach Anspruch 18, bei der die genannten Bilder bewegte Bilder sind.

20. Vorrichtung nach Anspruch 18 oder Anspruch 19, ferner umfassend einen zweiten Spiegel (58), der so positioniert ist, dass Bilder auf dem genannten zweiten Schirm (34) in dem genannten zweiten Spiegel (58) und dann auf den genannten ersten Spiegel (32) gespiegelt werden.

21. Vorrichtung nach einem der Ansprüche 18 bis 20, ferner umfassend einen dritten Schirm (56), der von dem genannten Zuschauerbereich (26) aus nicht sichtbar ist und zwischen einer Mehrzahl von dritten parallelen Positionen bewegbar ist, wobei das genannte Bilderzeugungssystem auch selektiv aktiviert werden kann, um Bilder auf dem genannten dritten Schirm (56) zu platzieren, sodass eine dritte Reihe von Bildern auf dem genannten dritten Schirm (56) wegen Spiegelung von dem genannten ersten Spiegel (32) für die genannten Personen in dem genannten Publikum sichtbar ist und an einem ausgewählten Ort befindlich zu sein scheint, der durch die Position des genannten dritten Schirms (56) relativ zu dem genannten Spiegel (32) bestimmt wird, wobei die genannte Schaltvorrichtung (42) auch selektiv veranlasst, dass der genannte dritte Schirm (56) bewegt wird.

22. Vorrichtung nach Anspruch 21, bei der der genannte erste Projektionsschirm (20) zwischen einer Mehrzahl erster paralleler Positionen in Koordination mit selektiver Aktivierung des genannten Bilderzeugungssystems und des genannten Beleuchtungssystems (30) und Bewegungen des genannten zweiten Schirms (34) und des genannten dritten Schirms (56) selektiv bewegbar ist, um einen oder mehrere ausgewählte Effekte zu erzeugen, die für die genannte Person sichtbar sind.

23. Vorrichtung nach einem der vorhergehenden Ansprüche, ferner umfassend einen Kontrollbildschirm (60), um Schauspieler in dem genannten Bühnenbereich (28) zu befähigen, die visuellen Illusionseffekte zu sehen, die für Personen in dem genannten Publikum sichtbar sind.

24. Verfahren nach Anspruch 9, bei dem die Vorrichtung Folgendes hat: einen zweiten geneigten teildurchlässigen Spiegel, einen dritten Schirm (56), der von dem genannten Zuschauerbereich (26) aus nicht sichtbar ist und zwischen einer Mehrzahl von dritten parallelen Positionen bewegbar ist, sodass eine dritte Reihe von Bildern auf dem genannten dritten Schirm (56) für die genannten Personen sichtbar ist, wenn die genannte dritte Reihe von Bildern durch den genannten zweiten Spiegel (58) transmittiert und auf dem genannten ersten Spiegel (32) gespiegelt wird, wobei die genannte dritte Reihe von Bildern für die genannten Personen an einem ausgewählten Ort befindlich zu sein scheint, der durch die Position des genannten dritten Projektionsschirms (56) bestimmt wird, und ein Bilderzeugungssystem zum selektiven Erzeugen von (i) einer ersten Reihe von Bildern auf dem genannten ersten Projektionsschirm (20), sodass die genannten Bilder für Personen in dem genannten Zuschauerbereich (26) auf dem genannten Schirm (20) sichtbar sind und sodass Objekte und Schauspieler in dem genannten Bühnenbereich keine Schatten auf den genannten ersten Projektionsschirm (20) werfen, (ii) einer zweiten Reihe von Bildern auf dem genannten zweiten Schirm (34) und (iii) einer dritten Reihe von Bildern auf dem genannten dritten Schirm (56), ein Beleuchtungssystem (30) für den genannten Bühnenbereich zum selektiven Beleuchten von auf dem genannten Bühnenbereich (28) befindlichen stehenden oder in Bewegung befindlichen Objekten oder Schauspielern, einen Positionssensor (50) und eine rechnergesteuerte Schaltvorrichtung (42) zum selektiven Aktivieren des genannten Bilderzeugungssystems und des genannten Beleuchtungssystems (30) und zum Bewirken der Bewegung des genannten zweiten (34) und dritten Schirms (56), wobei eine scheinbare Transparenz und ein scheinbarer Ort, mit Bezug auf den Ort des genannten ersten Projektionsschirms (20) und des genannten Zuschauerbereichs (26), von jedem der genannten in Bewegung befindlichen und stehenden Objekte oder Schauspieler, die sich tatsächlich auf dem genannten Bühnenbereich (28) befinden, mit Hilfe der genannten Schaltvorrichtung (42) veränderbar sind, um die Koordinierung von (i) Bewegungen des genannten zweiten und dritten Schirms (34, 56), (ii) der selektiven Aktivierung des genannten Bilderzeugungssystems, (iii) der Aktivierung des genannten Beleuchtungssystems (30) und (iv) der Verwendung des genannten Positionssensors (50) zu bewirken, wobei das Verfahren die folgenden Schritte aufweist: Platzieren von einem oder mehreren Objekten oder Schauspielern auf dem genannten Bühnenbereich (28) zwischen dem genannten teildurchlässigen Spiegel (32) und dem genannten ersten Projektionsschirm (20) und Nutzen der genannten Schaltvorrichtung (42) zum Koordinieren von Bewegungen der genannten Schirme (20, 34), der Aktivierung der genannten Bilderzeugungsquelle zum Erzeugen von Bildern auf einem oder mehreren ausgewählten Schirmen (20, 34) in einer bestimmten Sequenz und der Beleuchtung der genannten Objekte und Schauspieler.

## Revendications

1. Appareil pour réaliser des effets d'illusion visuelle, comprenant un premier écran de projection (20) positionné dans un premier plan (24), une zone d'observation (26), une zone de scène (28), un système d'éclairage (30) pour ladite zone de scène (28) afin d'éclairer des objets sur ladite zone de scène (28) à un niveau d'éclairage voulu sans éclairer directement ledit premier écran de projection (20), une plaque inclinée partiellement réfléchissante (32) entre ladite zone d'observation (26) et ladite zone de scène (28), un deuxième écran de projection (34) positionné dans un second plan (36) et faisant un premier angle avec ledit premier plan (24), un premier moyen de projection (38) pour projeter des images sur ledit premier écran de projection (20), un deuxième moyen de projection (40), et une source d'images vidéo pour les premier et deuxième moyens de projection (38, 40), **caractérisé en ce que** le premier écran de projection (20) a une face avant (22) pouvant être vue par les personnes d'une assistance se trouvant dans la zone d'observation (26) et **en ce que** la zone de scène (28) est disposée entre la zone d'observation (26) et le premier écran de projection (20) et dans lequel la plaque (32) est un miroir partiellement étamé et est inclinée vers le haut en s'éloignant de la zone d'observation (26) entre les premier et deuxième plans (24, 36) occupés par les premier et deuxième écrans de projection (20, 34) en faisant un angle avec les premier et deuxième plans (24, 36), l'appareil comprenant en outre un moyen de commutation (42) commandé par ordinateur pour alterner entre les images projetées par lesdits premier et deuxième moyens de projection (38, 40), l'agencement étant tel que les images projetées sur le premier écran de projection (20) par le premier moyen de projection (38) sont visibles pour une assistance située dans la zone d'observation (26) et que les images projetées sur le deuxième écran de projection (34) sont visibles pour une assistance au moyen de la réflexion sur le deuxième miroir (32) et paraissent se trouver à un emplacement sélectionné, le moyen de commutation (42) commandé par ordinateur pouvant être actionné pour présenter à une assistance une image fournie par l'un ou l'autre ou par les deux moyens de projection (38, 40) à n'importe quel moment donné.

2. Appareil selon la revendication 1, dans lequel ledit miroir (32) est approximativement semi-étamé.

3. Appareil selon l'une quelconque des revendications 1 ou 2, dans lequel au moins l'un desdits écrans (20, 34) est mobile.

4. Appareil selon la revendication 3, dans lequel ledit deuxième écran (34) est mobile pendant la représentation sur la zone de scène (28) à au moins un deuxième autre plan parallèle audit deuxième plan (36).

5. Appareil selon l'une quelconque des revendications précédentes, dans lequel ledit deuxième écran de projection (34) est un écran de rétro-projection et ledit deuxième moyen de projection (40) est un moyen de rétro-projection dans lequel les images sont réversibles électriquement.

6. Appareil selon la revendication 1 dans lequel ledit deuxième écran de projection (34) est un écran de rétro-projection, ledit appareil comprend en outre un miroir entièrement étamé parallèle audit miroir partiellement étamé (32), et dans lequel les images dudit deuxième moyen de projection (40) sont projetées sur ledit miroir entièrement étamé puis projetées sur ledit deuxième écran de projection (34).

7. Appareil selon l'une quelconque des revendications précédentes, dans lequel ledit moyen d'alternance entre les images desdits moyens de projection comprend un moyen de fondu des images.

8. Appareil selon l'une quelconque des revendications précédentes, dans lequel le miroir incliné (32) est positionné entre les premier et deuxième plans (24, 36) et fait un angle égal avec lesdits premier et deuxième plans (24, 36).

9. Procédé de réalisation d'effets d'illusion visuelle, comprenant les étapes consistant à fournir un premier écran de projection (20) positionné dans un premier plan (24), une zone d'observation (26), une zone de scène (28), un système d'éclairage (30) pour ladite zone de scène (28) afin d'éclairer des objets sur ladite zone de scène (28) à un niveau d'éclairage voulu sans éclairer directement ledit premier écran de projection (20), une plaque inclinée partiellement réfléchissante (32) entre ladite zone d'observation (26) et ladite zone de scène (28), un deuxième écran de projection (34) positionné dans un deuxième plan (36) et faisant un premier angle avec ledit premier plan (24), un premier moyen de projection (40), et une source d'images vidéo pour les moyens de projection (38, 40), le premier écran de projection (20) ayant une face avant visible pour des personnes d'une assistance située dans la zone d'observation (26), et la zone de scène (28) étant disposée entre la zone d'observation (26) et le premier écran de projection (20), et dans lequel la plaque (32) est un miroir partiellement étamé et est inclinée vers le haut en s'éloignant de la zone d'observation (26) entre les premier et deuxième plans (24, 36) occupés par les premier et deuxième écrans de projection (20, 34) et faisant un angle avec les premier et deuxième plans (24, 36), l'appareil comprenant en outre un moyen de commutation (42) commandé par ordinateur pour alterner entre les images projetées par lesdits premier et deuxième moyens de projection (38, 40), l'agencement étant tel que les images projetées sur le premier écran de projection (20) par le premier moyen de projection (38) sont visibles pour une assistance située dans la zone d'observation (26) et que les images projetées sur le deuxième écran de projection (34) sont visibles pour une assistance au moyen de la réflexion sur le miroir (32) et paraissent se trouver à un emplacement sélectionné, le moyen de commutation (42) commandé par ordinateur pouvant être actionné pour présenter à une assistance une image émise par l'un ou l'autre ou les deux moyens de projection (38, 40) à n'importe quel moment donné, le procédé étant **caractérisé par** les étapes consistant à placer un objet entre ledit miroir partiellement étamé (32) et ledit écran de rétro-projection (20) et à utiliser lesdits moyens de projection (38, 40) pour créer une illusion visuelle, associée avec ledit objet, à un emplacement apparent, ledit emplacement apparent étant sélectionné dans le groupe comprenant (i) un emplacement devant les images situées sur le premier écran de projection (20), (ii) un emplacement derrière les images situées sur le premier écran de projection (20), et (iii) un emplacement non visible.

10. Procédé selon la revendication 9, dans lequel les effets d'illusion d'optique comprennent le fait de rendre un personnage ou un objet situé sur ladite zone de scène (28) invisible pour les personnes se trouvant dans ladite zone d'observation (26), ledit appareil comprenant en outre un système d'éclairage (30) pour ladite zone de scène (28) pour éclairer les objets situés sur ladite zone de scène (28) à un niveau d'éclairage voulu sans éclairer directement ledit écran de rétro-projection (20), et ledit procédé comprenant en outre l'éclairage dudit personnage ou objet lorsque les images sont projetées par ledit premier moyen de projection (38), et la cessation de l'éclairage dudit personnage ou objet lorsque des images sont projetées par ledit deuxième moyen de projection (40).

11. Procédé selon la revendication 9 ou la revendication 10, comprenant en outre le déplacement dudit deuxième écran de projection (34) à un plan parallèle audit deuxième plan (36), pour entraîner ainsi un changement dans l'emplacement apparent des images situées sur ledit deuxième écran de projection (34) par rapport aux images situées sur ledit premier écran de projection (20).

12. Procédé selon la revendication 11, comprenant en outre la fourniture d'un personnage dans une production utilisant ledit appareil avec un dispositif détecteur de position (50).

13. Procédé selon la revendication 12, comprenant en outre la liaison dudit dispositif détecteur de position (50) avec des moyens d'illustration graphique qui sont visibles sur au moins l'un desdits écrans de projection (20, 34).

14. Procédé selon la revendication 13, dans lequel lesdits moyens d'illustration graphique ont pour résultat une image animée qui paraît être sur un plan dans l'espace entre ledit premier plan (24) et la zone d'observation (26).

15. Procédé selon l'une quelconque des revendications 12 à 14, dans lequel le procédé comprend les étapes consistant à fournir des images de tableau mobile qui sont visibles pour une assistance située dans la zone d'observation (26), en utilisant l'un ou l'autre des moyens de projection (38, 40) de telle sorte qu'un objet ou un acteur situé sur la zone de scène (28) paraît changer entre le fait de faire partie des images du tableau mobile, d'être transparent jusqu'à un degré choisi, d'être invisible, d'être sur la zone de scène (28) séparé des images du tableau mobile, et d'interagir avec les images du tableau mobile par la coordination du degré de transparence de l'objet ou de l'acteur avec l'apparition et la disparition d'images dans le tableau mobile, par l'utilisation sélective coordonnée desdits moyens de projection (38, 40), dudit moyen d'éclairage et dudit détecteur de position (50).

16. Procédé selon la revendication 15, comprenant les étapes d'utilisation du premier moyen de projection (20) pour fournir les images du tableau mobile.

17. Procédé selon la revendication 15 ou la revendication 16, comprenant en outre le déplacement dudit deuxième écran de projection (34) avec pour résultat un changement de l'emplacement apparent des images sur ledit deuxième écran de projection (34) par rapport aux images situées sur ledit premier écran de projection (20).

18. Appareil selon l'une quelconque des revendications 1 à 7, dans lequel ledit deuxième écran de projection (34) n'est pas visible de ladite zone d'observation (26) et peut être déplacé entre une pluralité de deuxièmes positions parallèles de telle sorte qu'une deuxième série d'images sur ledit deuxième écran de projection (34) est visible pour une assistance du fait de la réflexion de ladite deuxième série d'images sur ledit miroir partiellement étamé (32), dans lequel ladite deuxième série d'images paraît à l'assistance se trouver à un emplacement sélectionné qui est déterminé par la position dudit deuxième écran de projection (34), l'appareil comprenant en outre un système de production d'images pour placer sélectivement des images sur ledit premier écran (20) et ledit deuxième écran (34), le moyen de commutation (42) commandé par ordinateur pouvant être actionné pour activer sélectivement ledit système de production d'images et ledit système d'éclairage (30), et pour faire déplacer ledit deuxième écran (34), dans lequel on peut faire paraître plus ou moins transparents les objets et les acteurs effectivement situés sur ladite zone de scène (28) et les faire situer à des emplacements différents les uns par rapport aux autres et par rapport audit premier écran (20) et à ladite zone d'observation (28), par coordination synchronisée (i) du déplacement dudit deuxième écran (34), (ii) de la production sélective de séries d'images, et (iii) de l'activation dudit système d'éclairage (30) et dans lequel on peut faire disparaître complètement des objets ou les rendre transparents en alignant les écrans (30, 34) pour qu'ils soient équidistants du miroir partiellement étamé (32) et fassent le même angle avec lui.

19. L'appareil de la revendication 18, dans lequel lesdites images sont des images mobiles.

20. L'appareil de la revendication 18 ou de la revendication 19, comprenant en outre un deuxième miroir (58) positionné de telle sorte que les images situées sur ledit deuxième écran (34) soient reflétées dans ledit deuxième miroir (58) puis sur ledit premier miroir (32).

21. L'appareil selon l'une quelconque des revendications 18 à 20, comprenant en outre un troisième écran (56) non visible de ladite zone d'observation (26) et pouvant être déplacé entre une pluralité de troisièmes positions parallèles, dans lequel ledit système de production d'images peut aussi être activé sélectivement pour placer des images sur ledit troisième écran (56), de telle sorte qu'une troisième série d'images sur ledit troisième écran (56) soit visible pour lesdites personnes situées dans ladite assistance du fait de la réflexion dudit premier miroir (32), et paraisse être située à un emplacement sélectionné qui est déterminé par la position dudit troisième écran (56) par rapport audit miroir (32), dans lequel ledit appareil de commutation (42) fait aussi déplacer sélectivement ledit troisième écran (56).

22. L'appareil de la revendication 21, dans lequel ledit premier écran de projection (20) est sélectivement mobile entre une pluralité de premières positions parallèles en coordination avec l'activation sélective dudit système de production d'images et dudit système d'éclairage (30) et le déplacement dudit deuxième écran (34) et dudit troisième écran (56), pour produire un ou plusieurs effets sélectionnés visibles pour ladite personne.

23. L'appareil selon l'une quelconque des revendications précédentes comprenant en outre un écran de contrôle (60) pour permettre aux acteurs situés dans ladite zone de scène (28) de voir les effets d'illusion visuelle qui sont visibles pour les personnes situées dans ladite assistance.

24. Procédé selon la revendication 9, dans lequel l'appareil comprend un deuxième miroir incliné partiellement étamé, un troisième écran (56) invisible de ladite zone d'observation (26) et pouvant être déplacé entre une pluralité de troisièmes positions parallèles de telle sorte qu'une troisième série d'images sur ledit troisième écran (56) soit visible pour lesdites personnes lorsque ladite troisième série d'images est transmise à travers ledit deuxième miroir (58) et reflétée sur ledit premier miroir (32), dans lequel ladite troisième série d'images paraît aux dites personnes être située à un emplacement sélectionné qui est déterminé par la position dudit troisième écran (56) et un système de production d'images, pour la production sélective (i) d'une première série d'images sur ledit premier écran de projection (20) de telle sorte que lesdites images soient visibles sur ledit écran (20) pour les personnes situées dans ladite zone d'observation (26), et de telle sorte que les objets et acteurs situés dans ladite zone de scène ne projettent pas d'ombres sur ledit premier écran de projection (20), (ii) d'une deuxième série d'images sur ledit deuxième écran (34), et (iii) d'une troisième série d'images sur ledit troisième écran (56), un système d'éclairage (30) pour ladite zone de scène, pour l'éclairage sélectif d'objets ou d'acteurs fixes ou mobiles situés sur ladite zone de scène (28), un détecteur de position (50) et un appareil de commutation (42) commandé par ordinateur pour activer sélectivement ledit système de production d'images et ledit système d'éclairage (30) et pour faire déplacer lesdits second (34) et troisième (56) écrans, dans lequel une transparence apparente et un emplacement apparent, par rapport à l'emplacement dudit premier écran de projection (20) et de ladite zone d'observation (26), de chacun desdits objets ou acteurs mobiles et fixes, qui sont effectivement situés sur ladite zone de scène (28), peuvent être changés au moyen dudit appareil de commutation (42) pour entraîner la coordination (i) du déplacement desdits second et troisième écrans (34, 56), (ii) de l'activation sélective dudit système de production d'images, (iii) de l'activation dudit système d'éclairage (30), et (iv) de l'utilisation dudit détecteur de position (50), dans lequel le procédé comprend les étapes consistant à placer un ou plusieurs objets ou acteurs sur ladite zone de scène (28) entre ledit miroir partiellement étamé (32) et ledit premier écran de projection (20), et à utiliser ledit appareil de commutation (42) pour coordonner le déplacement desdits écrans (20, 34), l'activation de ladite source de production d'images pour produire des images sur un ou plusieurs écrans sélectionnés (20, 34) dans un ordre déterminé, et l'éclairage desdits objets et acteurs.
